(19) Europäisches Patentamt / European Patent Office / Office européen des brevets

(11) **EP 4 755 201 A1**

(12) **EUROPEAN PATENT APPLICATION**
published in accordance with Art. 153(4) EPC

(43) Date of publication:
**10.06.2026 Bulletin 2026/24**

(21) Application number: **24848867.8**

(22) Date of filing: **11.07.2024**

(51) International Patent Classification (IPC):
*A23L 29/20* (2016.01)    *A23C 11/10* (2025.01)
*A23L 11/00* (2025.01)    *A23L 11/60* (2025.01)
*A23L 11/65* (2025.01)    *A23L 29/206* (2016.01)
*C08B 37/00* (2006.01)

(52) Cooperative Patent Classification (CPC):
A23C 11/10; A23L 11/00; A23L 11/60; A23L 11/65;
A23L 29/20; A23L 29/206; C08B 37/00

(86) International application number:
**PCT/JP2024/025070**

(87) International publication number:
**WO 2025/028209 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023 JP 2023125497**

(71) Applicant: **Fuji Oil Co., Ltd.**
**Izumisano-shi, Osaka 598-8540 (JP)**

(72) Inventors:
• **NAKAMURA, Akihiro**
  **Inashiki-gun, Ibaraki 300-0393 (JP)**
• **IIDA, Minori**
  **Inashiki-gun, Ibaraki 300-0393 (JP)**
• **ADACHI, Norifumi**
  **Tsukubamirai-shi, Ibaraki 300-2436 (JP)**

(74) Representative: **Boult Wade Tennant LLP**
**Salisbury Square House**
**8 Salisbury Square**
**London EC4Y 8AP (GB)**

(54) **ACIDIC POLYSACCHARIDE AND METHOD FOR PRODUCING SAME**

(57)    An object of the present invention is to provide a dispersion stabilizer for suppressing precipitation and aggregation of a protein under acidic conditions, particularly in a pH range from pH 3.6 to pH 4.4, which is more acidic than near an isoelectric point of the protein and also for providing an acidic protein beverage having low viscosity with a refreshing taste. An acidic polysaccharide having a mass average molecular weight of from 2000000 to 8000000 and containing, as constituent saccharides, 60 wt.% or more of galactose, 20 wt.% or less of uronic acid, and 4 wt.% or more of glucuronic acid, is extracted from lupin beans at a temperature higher than 100°C with pH from 4 to 9 and can stabilize the dispersion of protein particles in wide pH ranges from pH 4.0 to pH 4.4, and from pH 3.6 to pH 4.4 in a case of particularly excellent acidic polysaccharide.

FIG. 1

## Description

Technical Field

The present invention relates to an acidic polysaccharide, a method for producing the same, a dispersion stabilizer for proteins by the acidic polysaccharide, and a method for stabilizing an acidic protein beverage.

Background Art

A beverage obtained by fermenting a protein-containing beverage such as milk or soy milk with lactic acid bacteria or the like, or a beverage obtained by directly adding an organic acid to the protein-containing beverage is called an acidic protein beverage. These acidic protein beverages are preferred as beverages having a fresh acidic taste. However, under acidic conditions, particularly on the more acidic side than near an isoelectric point of the protein, protein may aggregate and eventually precipitate, and the value of the acidic protein beverage as a product may be significantly impaired. Thus, for the purpose of stabilizing dispersion of protein, a dispersion stabilizer such as high methoxyl pectin or carboxymethyl cellulose has been used (Patent Document 1). These dispersion stabilizers have an issue in that they electrostatically react with protein particles dispersed in water, form a weak network of polysaccharides in a beverage, and impart viscosity to an aqueous system in order to suppress aggregated precipitation of the protein, thereby they impart a characteristic viscosity to the beverage (Non-Patent Document 1).

On the other hand, water-soluble soybean polysaccharides obtained by extracting polysaccharides contained in cotyledons of soybean seeds have a function of suppressing protein aggregation under acidic conditions as with high methoxy pectin and carboxymethyl cellulose, and have been used as stabilizers for the acidic protein beverage (Patent Document 2). It is believed that the water-soluble soybean polysaccharide electrostatically reacts with the protein particles to cover the surfaces of the protein particles, and thus to suppress aggregation, and the protein particles finely dispersed by a homogenization treatment are dispersed by Brownian motion to be stabilized. Thus, the polysaccharides provide acidic milk beverages with a refreshing light taste, without imparting viscosity (Non-Patent Document 2).

Polysaccharides derived from peas have also been reported as stabilizers for acidic protein beverages of pH 3.4 to pH 4.5 (Patent Documents 3 and 4).

Note that acidic protein beverages can be made as beverages having various pH values, from near the isoelectric point of the protein to further on the acidic side. Among these, from pH 4.0 to pH 4.5, which is near the isoelectric point of milk protein, the surface charge of the protein is in a non-charged to slightly positive-charged state, and the strongly negative-charged polysaccharides indicate a good dispersion stabilizing ability. Thus, high methoxy pectin, carboxymethyl cellulose, phosphate-crosslinked polysaccharides, and the like indicate good dispersion stability (Patent Document 5).

In contrast, under more acidic conditions at less than pH 4.0, the surface charge of protein is more strongly positive-charged. As for the strongly negative-charged polysaccharides described above, since a strong reaction with protein particles occurs to cause aggregate precipitation called depression, a good stable state cannot be achieved. It is assumed that in this pH range, weakly negative-charged water-soluble soybean polysaccharides indicate good dispersion stability.

Citation List

Patent Document

    Patent Document 1: JP 2599477 B
    Patent Document 2: JP 3280768 B
    Patent Document 3: WO 2012/176852
    Patent Document 4: WO 2016/031858
    Patent Document 5: WO 2008/149738

Non-Patent Document

    Non-Patent Document 1: Food Hydrocolloids, 17, 333-343, 2003
    Non-Patent Document 2: J. Agric. Food Chem., 54 (17), 6241-6246, 2006

Summary of Invention

Technical Problem

High methoxy pectin and carboxymethyl cellulose, which are polysaccharides that suppress aggregation of protein under from pH 4.0 to pH 4.5, are polysaccharides exhibiting high viscosity characteristics, and the finished acidic protein beverage also has a high viscosity and provides a heavy taste. Although the protein content in the acidic protein beverage is generally from 0.3 to 3 wt.%, in recent years, a stabilizer for suppressing protein aggregation, which maintains a low viscosity of the beverage even in a high protein beverage more than 3 wt.%, has been desired from the market.

Examples of the dispersion stabilizer capable of maintaining the stability of protein beverages under slightly acidic conditions from near the isoelectric point of the protein without imparting viscosity to the beverages include acidic polysaccharides disclosed in Patent Document 2 and Patent Document 3. However, in such polysaccharides, a deesterification step is essential for the expression of the functions. The invention of Patent Document 4 in which the deesterification step is unnecessary also requires a step of washing a raw material.

An object of the present invention is to provide a dispersion stabilizer for suppressing precipitation and aggregation of a protein under acidic conditions, particularly in a pH range more acidic than near an isoelectric point of a protein, which is from pH 4.0 to pH 4.4, and from pH 3.6 to pH 4.4 in a particularly excellent case, and for preparing an acidic protein beverage with low viscosity and a refreshing taste. In addition, a second object of the present invention is to provide the stabilizer without requiring one of a washing step of a raw material or a deesterification step, or both of the steps.

Solution to Problem

As a result of intensive studies on the above-described issues, the present inventors have found that acidic polysaccharides extracted from lupine seeds can stabilize dispersion of protein particles in a wide pH range from pH 3.6 to pH 4.4, and have completed the present invention.

That is, the present invention relates to:

(1) an acidic polysaccharide, having a mass average molecular weight of from 2000000 to 8000000 and containing, as constituent saccharides, 60 wt.% or more of galactose, 20 wt.% or less of uronic acid, and 4 wt.% or more of glucuronic acid;

(2) the acidic polysaccharide according to (1), wherein a degree of methyl esterification of the uronic acid is 60% or more;

(3) the acidic polysaccharide according to (1) or (2), which is derived from beans;

(4) the acidic polysaccharide according to (3), which is derived from a seed of a lupin bean;

(5) the acidic polysaccharide according to claim 1 or 2, wherein a structure of a single molecule observed by an atomic force microscope has a linear structure;

(6) the acidic polysaccharide according to (1), wherein a degree of methyl esterification of the uronic acid is 60% or more, the acidic polysaccharide is derived from a seed of a lupin bean, and a structure of a single molecule observed by an atomic force microscope has a linear structure;

(7) a method for producing an acidic polysaccharide, the method including heat-extracting a seed of a lupin bean or fibrous fraction thereof as a raw material at a temperature higher than 100°C in an aqueous medium having from pH 4 to pH 9;

(8) the method for producing an acidic polysaccharide according to (7), wherein neither a deesterification step nor a washing step of a raw material is performed.

(9) the method for producing an acidic polysaccharide according to (7), wherein the acidic polysaccharide to be obtained has a molecular weight of from 2000000 to 8000000 and contains, as constituent saccharides, 60 wt.% or more of galactose, 20 wt.% or less of uronic acid, and 4 wt.% or more of glucuronic acid;

(10) the method for producing an acidic polysaccharide according to (8), wherein the acidic polysaccharide to be obtained has a molecular weight of from 2000000 to 8000000 and contains, as constituent saccharides, 60 wt.% or more of galactose, 20 wt.% or less of uronic acid, and 4 wt.% or more of glucuronic acid;

(11) a dispersion stabilizer for a protein, including, as an active ingredient, an acidic polysaccharide having a molecular weight of from 2000000 to 8000000, the acidic polysaccharide containing, as constituent saccharides, 60 wt.% or more of galactose, 20 wt.% or less of uronic acid, and 4 wt.% or more of glucuronic acid;

(12) the dispersion stabilizer for a protein according to (11), wherein the acidic polysaccharide is derived from beans;

(13) the dispersion stabilizer according to (11) or (12), which is for an acidic protein beverage;

(14) the dispersion stabilizer according to (13), which is for an acidic protein beverage having a protein content of 1 wt.% or more in the beverage;

(15) the dispersion stabilizer for a protein according to (11), wherein the acidic polysaccharide is derived from beans, and the dispersion stabilizer is for an acidic protein beverage having a protein content of 1 wt.% or more in the beverage;

(16) a method for stabilizing dispersion for an acidic protein beverage, the method including using an acidic polysaccharide having a molecular weight of from 2000000 to 8000000 and containing, as constituent saccharides, 60 wt.% or more of galactose, 20 wt.% or less of uronic acid, and 4 wt.% or more of glucuronic acid;

(17) the method for stabilizing dispersion for an acidic protein beverage according to (16), wherein the acidic polysaccharide is derived from beans;

(18) the method for stabilizing dispersion for an acidic protein beverage according to (16), wherein the acidic protein beverage has a protein content of 1 wt.% or more in the beverage; and

(19) the method for stabilizing dispersion for an acidic protein beverage according to (17), wherein the acidic protein beverage has a protein content of 1 wt.% or more in the beverage.

In addition, the present invention also relates to:

(1) an acidic polysaccharide, having a mass average molecular weight of from 2000000 to 8000000 and containing, as constituent saccharides, 60 wt.% or more of galactose, 20 wt.% or less of uronic acid, and 4 wt.% or more of glucuronic acid;

(2) the acidic polysaccharide according to (1), wherein a degree of methyl esterification of the uronic acid is 60% or more;

(3) the acidic polysaccharide according to (1) or (2), which is derived from beans;

(4) the acidic polysaccharide according to (3), which is derived from a seed of a lupin bean;

(5) the acidic polysaccharide according to (1) or (2), wherein a structure of a single molecule observed by an atomic force microscope has a linear structure;

(6) a method for producing an acidic polysaccharide, the method including heat-extracting a seed of a lupin bean or fibrous fraction thereof as a raw material at a temperature higher than 100°C in an aqueous medium having from pH 4 to pH 9;

(7) the method for producing an acidic polysaccharide according to (6), wherein neither a deesterification step nor a washing step of a raw material is performed;

(8) the method for producing an acidic polysaccharide according to (6) or (7), wherein the acidic polysaccharide to be obtained has a molecular weight of from 2000000 to 8000000 and contains, as constituent saccharides, 60 wt.% or more of galactose, 20 wt.% or less of uronic acid, and 4 wt.% or more of glucuronic acid;

(9) a dispersion stabilizer for a protein, including, as an active ingredient, an acidic polysaccharide having a molecular weight of from 2000000 to 8000000, the acidic polysaccharide containing, as constituent saccharides, 60 wt.% or more of galactose, 20 wt.% or less of uronic acid, and 4 wt.% or more of glucuronic acid;

(10) the dispersion stabilizer for a protein according to (9), wherein the acidic polysaccharide is derived from beans;

(11) the dispersion stabilizer according to (9) or (10), which is for an acidic protein beverage;

(12) the dispersion stabilizer according to (11), which is for an acidic protein beverage having a protein content of 1 wt.% or more in the beverage;

(13) a method for stabilizing dispersion for an acidic protein beverage, the method including using an acidic polysaccharide having a molecular weight of from 2000000 to 8000000 and containing, as constituent saccharides, 60 wt.% or more of galactose, 20 wt.% or less of uronic acid, and 4 wt.% or more of glucuronic acid;

(14) the method for stabilizing dispersion for an acidic protein beverage according to (13), wherein the acidic polysaccharide is derived from beans; and

(15) the method for stabilizing dispersion for according to (13) or (14), wherein the acidic protein beverage has a protein content of 1 wt.% or more in the beverage.

Advantageous Effects of Invention

By using the acidic polysaccharide prepared according to the present invention, aggregation and precipitation of a protein can be suppressed in a pH range from pH 4.0 to pH 4.4, and from pH 3.6 to pH 4.4 in a case of particularly excellent acidic polysaccharide, which are the pH ranges where protein aggregation and precipitation occurred in known art, and an acidic protein beverage with low viscosity and a refreshing taste in a system of, for example, 3 wt.% or more of nonfat milk solids content (1 wt.% of protein in the system) can thus be provided. It is possible to prepare an acidic protein beverage in which the growth of lactic acid bacteria is maintained in a range from pH 4.0 to pH 4.4 and to suppress generation of protein aggregates over time due to overfermentation. Alternatively, when sterilized-type acidic protein food is prepared in a range from pH 3.6 to pH 4.0, it is possible to suppress denaturation of the protein due to heat sterilization and generation of aggregates, and an acidic protein beverage of stabilized quality can thus be provided.

The acidic polysaccharide can be prepared without performing either the deesterification step or the washing step of a raw material.

Brief Description of Drawings

FIG. 1 is an atomic force microscope observation image of an acidic polysaccharide molecule (A) obtained from a lupine seed having a linear structure and a water-soluble soybean polysaccharide molecule (B) obtained from a soybean seed having a polybranched structure.
FIG. 2 is an example of a molecular weight distribution obtained by analyzing a lupin bean polysaccharide A by gel filtration chromatography. A mass average molecular weight of the present invention means the mass average molecular weight of a main component of a peak 1 obtained by analysis by gel filtration chromatography.

Description of Embodiments

Molecular Weight

Hereinafter, the present invention will be specifically described. A molecular weight of an acidic polysaccharide of the present invention can be analyzed by gel filtration chromatography using HPLC under the following conditions. The mass average molecular weight is from 2000000 to 8000000, preferably from 2000000 to 7000000, and more preferably from 4500000 to 6500000. The mass average molecular weight can be calculated by gel filtration chromatography (Size Exclusion Chromatography-Multi Angle Light Scattering: SEC-MALS) using TSK-gel G-6000PWXL ($\varphi$7.8 mm $\times$ 300 mm; TOSOH CORPORATION) as a separation column, and an RI detector and a polygonal light scattering detector calibrated with toluene as detectors. The separation conditions are as follows: eluent: 50 mM sodium acetate aqueous solution (pH 5.0), flow rate: 0.6 mL/min.

Constituent Saccharide

The acidic polysaccharide of the present invention is characterized by containing, as constituent saccharides, 60 wt.% or more of galactose, 20 wt.% or less of uronic acid, and 4 wt.% or more of glucuronic acid. In addition, those acidic polysaccharides containing galactose, arabinose, glucose, rhamnose, xylose, fucose, galacturonic acid, and glucuronic acid are preferable. The galactose content is preferably 65 wt.% or more, more preferably 70 wt.% or more. A total uronic acid content obtained by adding the galacturonic acid content and the glucuronic acid content is preferably from 6 wt.% to 15 wt.%. In the present invention, glucuronic acid is preferably contained in an amount of 5 wt.% or more, more preferably 5.5 wt.% or more. In addition, galacturonic acid is preferably contained in an amount of from 1 wt.% to 6 wt.%, and more preferably from 3 wt.% to 5 wt.%. A weight ratio of galactose to uronic acid is preferably 6.8 or more and more preferably 7.6 or less.

When the constituent saccharides fall within these ranges, precipitation and aggregation of the protein can be suppressed in a pH range from pH 4.0 to pH 4.4, and from pH 3.6 to pH 4.4 in a case of particularly excellent acidic polysaccharide, and a low-viscosity acidic polysaccharide can thus be obtained.

The analysis of galacturonic acid and glucuronic acid was carried out by ion exclusion chromatography using a Shodex Sugar-SH1821 column ($\varphi$8.0 mm $\times$ 300 mm; Showa Denko K.K.) and an RI detector after sulfuric acid decomposition, and a composition of a neutral saccharide was measured using an ion chromatography using a CarboPac PA-1 column ($\varphi$2.0 mm $\times$ 250 mm; Thermo) and an electrochemical detector after sulfuric acid decomposition.

Degree of Esterification

A degree of esterification is a ratio of a methyl ester of uronic acid constituting a polysaccharide represented by a molecular ratio. The acidic polysaccharide of the present invention has a function as a dispersion stabilizer without actively adjusting the degree of esterification of uronic acid. The degree of esterification of the acidic polysaccharide of the present invention is 60% or more, preferably 70% or more. Even when the degree of esterification is less than 60%, the acidic polysaccharide still has the function as the dispersion stabilizer; however, it is necessary to actively adjust the degree of esterification, and the process becomes complicated.

In normal pectin and the like, a so-called deesterification step of adjusting the degree of esterification is performed by performing alkali heating preferably at a pH of 12 or higher. In the present invention, heating on the weak alkali side when extracting the acidic polysaccharide, for example, heating at pH 9 has a slight influence over the degree of esterification and is not included in the step of adjusting the degree of esterification. The deesterification step, which is not particularly required in the present invention, means heating in an alkaline environment with a pH of 10 or higher. The heating temperature at this time is generally, for example, from 40 to 60°C at which reactivity is high and coloration is small.

Additionally, a degree of methyl esterification is calculated, after the amounts of uronic acid and methyl-esterified uronic acid are quantified by Doesburg titration method, with the following formula:

$$\text{methyl-esterified uronic acid / the total uronic acid} \times 100 \text{ (mol\%)}$$

Structure

In the acidic polysaccharide of the present invention, it is preferable that a single molecule observed by an atomic force microscope has a linear structure. In the present invention, the linear structure refers to a polybranched structure, and means a structure in which a side chain branched from a linear chain of a polysaccharide is hardly observed. In exemplifying a method for observing the molecular structure used in the present invention of the acidic polysaccharide obtained from a lupine seed, which is one example of the present invention, a 0.1 wt.% aqueous solution of the polysaccharide is prepared, purified water is added, the solution is diluted to 1 ppm acidic polysaccharides, and then, 0.5 $\mu$l of the solution is dropped on mica to be naturally dried. It is possible to identify the structure by observing the structure in the DFM mode of an atomic force microscope (SPI3800N, SPA300HV; SII) with a 20 N/m cantilever.

Raw Material

As a raw material of the acidic polysaccharide of the present invention, it is preferable to use beans. Examples of the beans include soybeans, peas, mung beans, broad beans, lupin beans, chickpeas, common beans, lentils, and black-eyed peas. Among these beans, it is particularly preferable to use the seeds of lupin beans. When lupin beans are used, it is preferable to use a cotyledon portion after an inner skin is peeled off. Although lupin beans for feed can also be used, edible lupin beans from which alkaloids have been reduced or removed are more preferable. As an example of an industrial method, a water-soluble fraction such as a protein fraction is extracted and separated once or multiple times with an aqueous medium from the lupin beans. Using the fiber fraction as a residue as a raw material, the acidic polysaccharide can be heat-extracted under the conditions described later. It is preferable that the fiber fraction separated as a residue is not subjected to further washing as a raw material, and washing is not performed.

By using beans as a raw material, an acidic polysaccharide having a desired constituent saccharide and protein dispersing ability can be easily obtained.

Heat Extraction

As for pH at extraction, hydrolysis of polysaccharides is easily facilitated during extraction under acidic conditions less than pH 4, and elimination and decomposition of polysaccharides are easily facilitated under alkaline conditions more than pH 9; therefore, a pH from 4 to 9 is suitable, and a pH from 6 to 8 is preferable. After addition of water to the raw material, and then, adjustment to a range from pH 4 to pH 9 with addition of an acid or alkaline, under pressure, an acidic polysaccharide is extracted at a temperature of higher than 100°C, preferably 150°C or lower, more preferably 105°C or higher and 135°C or lower. At a temperature of 100°C or lower, the extraction efficiency of acidic polysaccharide is poor, and less practical. At a temperature higher than 150°C, there may be a case where acidic polysaccharide is hydrolyzed during the extraction process, and it may be difficult to maintain the linear structure. The extraction period is approximately from 0.5 to 3 hours; however, it can be adjusted to any time period depending on the condition of the raw material and the temperature or the like. There is no particular limitation on acids and alkalis to be used. It is possible to use acids such as hydrochloric acid, sulfuric acid, phosphoric acid, citric acid, tartaric acid, acetic acid, and formic acid, and alkalis such as sodium hydroxide, calcium hydroxide, sodium hydrogen carbonate, sodium carbonate, and ammonia. Additionally, an enzyme reaction treatment may be performed before and after the extraction by using a high purity cellulase, hemicellulase, or pectinase with which the target acidic polysaccharide is not hydrolyzed, alone or in combination.

Purification

Although the extracted acidic polysaccharide can be obtained by separating and removing insoluble fiber content and drying, it is desirable to perform purification such as removal of protein, desalination, removal of pigment components for the purpose of allowing functions to be more developed. As for protein removal methods, it is possible to subject protein to aggregation and precipitation by a method such as isoelectric point precipitation through pH adjustment, and to remove the protein by physical separation means such as pressure filtration separation, centrifugation, and membrane separation. Alternatively, it is possible to decompose protein using optional proteolytic enzymes, and then, to adsorb and remove the decomposed protein using dialysis membranes, activated carbon, ion exchange, or hydrophobic resins. As for desalination methods, any methods such as electrodialysis, ion exchange resins, or UF membrane separation can be used, if the methods are those for removing these. As for methods for removing pigment components, in addition to methods for decomposing pigment components, such as ozone treatment or UV irradiation, any methods such as partition with hydrophilic polar solvents such as ethanol or isopropanol can be used. It is preferred that one, or two or more of these methods is used in combination. Acidic polysaccharide subjected to the purification treatment is subjected to optional sterilization treatment to thereby provide dried polysaccharide by means of methods such as freeze drying, spray drying, and hot-air drying of ethanol precipitates.

Starch Removal

When starch is contained in the raw material of the acidic polysaccharide of the present invention, although it is possible to obtain acidic polysaccharide as it is, if the polysaccharide is used in an acidic protein beverage, thickening or precipitation may occur because of the starch. Thus, it is preferable to remove starch in the stage of beans raw materials, in the stage of fiber separated from the beans raw materials, in the stage of extraction of acidic polysaccharide, or in the stage after extraction. It is possible to remove starch by combining one or more of methods for amylase decomposition, cooling precipitation, and aggregate precipitation with an emulsifier. Although dry fractionation is feasible if in the stage of raw materials, wet fractionation is suitable, wherein it is possible that the crushed raw material is added with water and heated to a temperature at which starch is not gelatinized to thereby allow the starch to be separated as starch particles by the centrifugation. Alternatively, it is also possible to decompose and remove starch by heating the raw material added with water to a temperature higher than the temperature at which the starch is gelatinized and then treating the raw material with amylase. If in the stage of fiber separated from beans raw materials, it is possible to decompose and remove starch by dispersing the fiber in water, heating the fiber to a temperature at which the starch is gelatinized, and then treating the fiber with amylase. Examples of methods for removing starch in the processes of extracting acidic polysaccharide or after extraction include adding amylase to a raw material added with water before extraction, adding amylase to extracted slurry before solid-liquid separation, or adding amylase to filtrate after solid-liquid separation.
Amylase is a generic name of enzymes that hydrolyze starch, and examples of amylase include β-amylase, α-amylase, glucoamylase, and pullulanase. Although these highly-purified amylases may be used for this purpose, commercially available amylase formulations in which one or more of these are mixed may be used. In this context, it is possible to decompose and remove starch by chemical approaches such as acid hydrolysis and alkali desorption decomposition in the stage raw material, fiber, or before or after extraction of acidic polysaccharide; however, starch removal treatment with enzyme treatment is preferable because the acidic polysaccharide of the present invention may be concurrently decomposed.

Dispersion Stabilizer

The acidic polysaccharide of the present invention functions as a dispersion stabilizer that suppresses aggregation of protein particles and maintains the stabilized dispersion state. The pH range thereof is from pH 4.0 to pH 4.4, and from pH 3.6 to pH 4.4 in a case of particularly excellent acidic polysaccharide, which is very wide. The acidic polysaccharide is suitable for acidic protein beverages such as yogurt drinks in which fermented milk is used, and acidic milk beverages prepared by directly adding acid. The stability of the known dispersion stabilizer such as pectin, carboxymethyl cellulose, or water-soluble soybean polysaccharides decreases in systems in which the nonfat milk solids content in the beverage is 3 wt.% or more (the protein concentration in the beverage of 1 wt.% or more), preferably 6 wt.% or more (the protein concentration of 2 wt.% or more). For example, in a system in which the nonfat milk solids content in the beverage is 8.4 wt.% (the protein concentration in the beverage of 2.8 wt.%), formation of clear upper layer or precipitation occurs after preservation for two weeks. In contrast, the acidic polysaccharide of the present invention almost does not form a clear upper layer or precipitation under the same preservation condition.
The dispersion stabilizer of the present invention can provide a low-viscosity beverage having less stickiness as compared with pectin and the like used in the prior art, the taste is less vagueness, and sourness and a milky taste are strongly felt. Additionally, since the viscosity is low, it is possible to adjust beverages to optional viscosity and drinking feelings by blending gum agents, thickening agents, proteins or hydrolysates thereof as required. Examples of materials that can be combined include polysaccharides, such as starch, processed starch, various celluloses, agar, carrageenan, furcellaran, guar gum, locust bean gum, fenugreek gum, konjac mannan, tamarind seed polysaccharides, tara gum, gum arabic, tragacanth gum, karaya gum, pectin, xanthan gum, pullulan, and gellan gum, and protein, such as gelatin and collagen.
As for the low-viscosity acidic protein beverage of the present invention, for example, the viscosity is 100 mPa·s or less, preferably 50 mPa·s or less, and more preferably 30 mPa·s or less in an acidic milk beverage having a non-fat milk solids content of 8.4% in the beverage.

Acidic Protein Beverage

The acidic protein beverage of the present invention is an acidic protein beverage containing protein derived from animals and/or plants and includes concentrates such as drink bases. Those containing protein derived from animals refer to mainly animal milks, such as cow's milk and goat's milk, specifically cow's milk, skim milk, whole fat powdered milk, powdered skim milk, whey powder, butter milk, butter milk powder, sweetened milk, condensed milk, concentrated milk, processed milk fortified with minerals such as calcium and vitamins or the like, or fermented milk, and those containing proteins derived from plants refer to so-called plant milk. Examples thereof include soy milk obtained from soybeans. Specifically, soy milk, defatted soybean milk, powdered soy milk, defatted soy milk powder, isolated soy protein, or fermented products are included. Examples of other plant milk include peas, mung beans, lentils, almonds, peanuts, rice, and oats. One or more beverages of these animal milks or plants are combined, fermented with addition of microorganisms such as lactic acid bacteria, or added with fruit juices, organic acids such as lactic acid and citric acid, or inorganic acids such as phosphoric acid to adjust the pH of the beverages to acidic. These beverages are acidic protein beverages. The examples specifically include sterilized type or live bacteria-type lactic acid bacteria beverages, drink yogurts and kefir.

Among these acidic protein beverages, those using the above-described animal milk as a raw material are acidic milk beverages, and are particularly preferable as the application of the present invention.

The dispersion stabilizer including the acidic polysaccharide of the present invention, when cow's milk is used, exerts its function effectively, suppresses aggregate precipitation of the protein, and maintains the stabilized dispersion state for a long period in an acidic protein beverage of which the nonfat milk solids content is 3 wt.% or more, that is, the protein concentration is 1 wt.% or more. For an acidic protein beverage of which the nonfat milk solids content is 6 wt.% or more (the protein concentration of 2 wt.%), the function becomes more pronounced.

The acidic polysaccharide of the present invention can, when added to an acidic protein beverage preferably in an amount of from 0.1 to 1.2 wt.%, more preferably from 0.2 to 1 wt.%, stabilize the dispersion of protein particles in a pH range from pH 4.0 to pH 4.4, and from pH 3.6 to pH 4.4 in a case of particularly excellent acidic polysaccharide. Although the dispersion stabilizer may adversely affect the taste of the beverage when blended at a high concentration, in the case of the acidic polysaccharide of the present invention, influence on the flavor like citrus pectin and water-soluble soybean polysaccharides is very low, even when blended to an acidic protein beverage at 1 wt.%.

It is preferable to perform homogenization treatment on the acidic protein beverage prepared in the present invention for the purpose of enhancing the dispersion stability of protein particles. Examples of homogenizing equipment include, without limitation, high-pressure homogenizers, homo mixers, Clear Mix (M Technique Co., Ltd.), Nanomizer (NANOMIZER Inc.), and a ultrasonic emulsifier. The homogenization pressure cannot be unequivocally determined because the flowability is not constant depending on the solids concentration of the acidic protein beverages; however, a pressure from 50 kgf/cm^2 to 500 kgf/cm^2 is preferred. Additionally, although the homogenization treatment may be performed at any stages in the process for producing an acidic protein beverage, it is preferable to perform the treatment after the protein is dispersed in water, after the protein is fermented or an acid is added, as well as after the dispersion stabilizer of the present invention is added.

Examples

The present invention is explained by describing Examples hereinafter, but the technical idea of the present invention is not to be limited to these exemplifications. In this context, all % and parts in Examples are intended to mean weight bases, unless otherwise described.

(Production Example 1)

50 kg of lupin bean seeds *(Lupinus luteus)* were hulled, subsequently, added with five times the amount of water, and immersed for 24 hours. The seeds were crushed with a homo mixer (5000 rpm, for 30 minutes), and protein and starch were extracted. An aqueous phase in which protein, starch, and the like were dispersed and dissolved was removed using a centrifuge at 2000 × g for 20 minutes, and a fiber as a residue was recovered.

80 parts of lupin bean fiber were dispersed in 920 parts of water, and after the pH was adjusted to pH 8 using sodium hydroxide, the dispersed fiber was heated at 120°C for 90 minutes to extract acidic polysaccharide. The insoluble fiber was removed by the centrifugation (5000 × g, for 30 minutes), and the supernatant was collected. The treated supernatant was adjusted to pH 7 and warmed to 60°C, then amylase (BAN480L; Novozyme) corresponding to 0.1 wt.% of the solids was added to decompose the starch for 1 hour. The decomposed starch was adjusted to pH 5 with hydrochloric acid, added with ethanol to achieve 60 wt.% to precipitate acidic polysaccharide, and washed with aqueous ethanol of 90 wt.%. The obtained precipitation was air dried to thereby obtain lupin bean polysaccharide A.

(Production Example 2) Comparison of pH at Extraction

In the method for producing the lupin bean polysaccharide A, exactly in same way except that the pH at extraction was set to 3, 4, 5, 6, 7, 9, or 10, and the pH at extraction was different, lupin bean polysaccharides B, C, D, E, F, G, and H were obtained. In the extraction from pH 4 to 9, the deesterification step was not performed. The extraction at pH 3 and pH 10 was Comparative Production Example, and the deesterification reaction substantially proceeded.

(Example 1) Measurement of molecular structure and mass average molecular weight

The lupin bean polysaccharides A to H and the water-soluble soybean polysaccharide (SOYAFIBE-S-DA100: Fuji Oil Co., Ltd.) to be compared were dried on mica, and the molecular structure was observed with an atomic force microscope.

The mass average molecular weights of the lupin bean polysaccharides A to H were measured by gel filtration chromatography (SEC-MALS). The analysis conditions are as follows. A 1 wt.% aqueous solution (a 50 mM sodium acetate aqueous solution, pH 5.0) of lupin bean polysaccharide was prepared, and a filtrate filtered with a 0.8 $\mu$m filter was subjected to analysis. To a TSK-gel G-6000PWXL column ($\varphi$7.8 mm $\times$ 300 mm; TOSOH CORPORATION) pre-equilibrated with a 50 mM sodium acetate aqueous solution, pH 5.0 at 40°C, 30 $\mu$L of the filtrate was added and separated at a flow rate: 0.6 mL/min. The separated polysaccharides were detected with an RI detector and a multiangle light scattering measurement device, and the mass average molecular weight was calculated. The result is summarized in Table 1.

(Table 1) Mass average molecular weight of each extracted polysaccharide

|  | Lupin bean polysaccharide | pH at the time of extraction | Mass average molecular weight· ($\times$ 10000) |
|---|---|---|---|
| Comparative Production Example | B | 3 | 18 |
| Production Example | C | 4 | 240 |
| Production Example | D | 5 | 410 |
| Production Example | E | 6 | 520 |
| Production Example | F | 7 | 560 |
| Production Example | A | 8 | 630 |
| Production Example | G | 9 | 500 |
| Comparative Production Example | H | 10 | 110 |

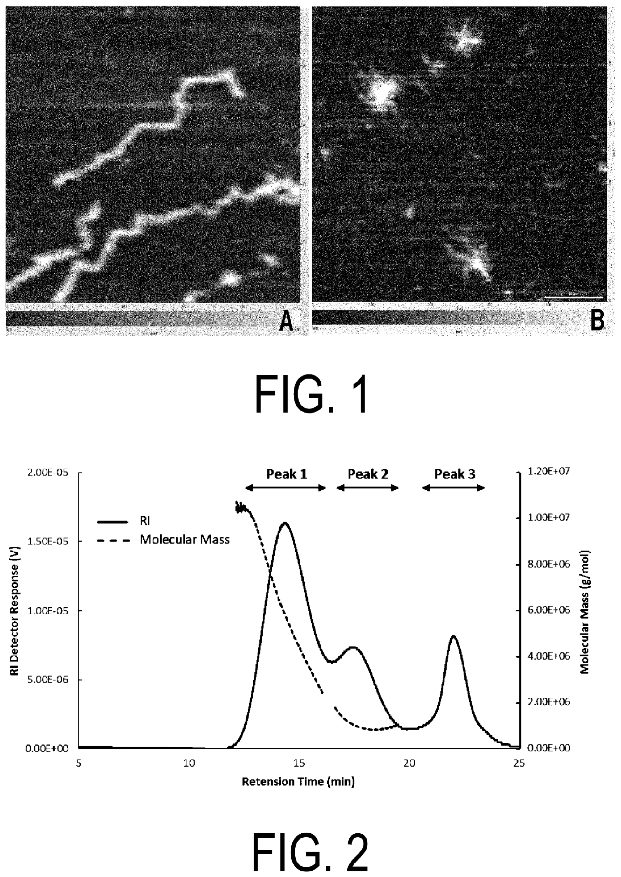

The molecular structure of the lupin bean polysaccharide A observed with an atomic force microscope is illustrated in FIG. 1(A). It was confirmed that the lupin bean polysaccharide had a linear structure, which was greatly different from the water-soluble soybean polysaccharide of FIG. 1 (B) having a polybranched structure. The lupin bean polysaccharides C, D, E, F, and G also had a similar linear structure.

According to the analysis result of the mass average molecular weight by SEC-MALS, all of the polysaccharides originating from the lupin bean included components having a molecular weight of 7000000 or less (FIG. 2). In the lupin bean polysaccharides B and H of Comparative Production Example, since decomposition was facilitated at extraction, the linear shape was not observed, and the mass average molecular weight was as small as 2000000 or less. In contrast, as for the lupin bean polysaccharides other than B and H, the mass average molecular weight was estimated to be from 2400000 to 6300000.

(Example 2) Sugar composition

The results of measuring the sugar compositions of the lupin bean polysaccharides A to H were summarized in Table 2. DE (%) represents the degree of esterification of uronic acid.

(Table 2) Sugar composition

| | Lupin bean polysaccharide | pH at the time of extraction | Sugar composition (wt.%) | | | | | | | | DE (mol%) | Gal/ (GlcA+GalA) |
|---|---|---|---|---|---|---|---|---|---|---|---|---|
| | | | Rha | Fuc | Xyl | Ara | Glc | Gal | GlcA | GalA | | |
| Comparative Production Example | B | 3 | 4.2 | 2.7 | 6.4 | 28.1 | 5.9 | 45.7 | 5.5 | 1.5 | 42.1 | 6.53 |
| Production Example | C | 4 | 1.6 | 0.4 | 1.9 | 15.7 | 1.2 | 71.2 | 6.2 | 1.8 | 71.0 | 8.90 |
| Production Example | D | 5 | 1.7 | 0.3 | 2.0 | 15.7 | 1.1 | 70.4 | 6.2 | 2.6 | 74.6 | 8.00 |
| Production Example | E | 6 | 1.2 | 0.5 | 1.7 | 14.7 | 1.1 | 71.0 | 5.8 | 4.0 | 75.5 | 7.24 |
| Production Example | F | 7 | 1.3 | 0.2 | 1.6 | 14.5 | 1.0 | 71.2 | 6.0 | 4.2 | 72.8 | 6.98 |
| Production Example | A | 8 | 1.3 | 0.4 | 1.7 | 14.1 | 1.0 | 71.7 | 5.8 | 4.0 | 76.4 | 7.32 |
| Production Example | G | 9 | 1.1 | 0.3 | 1.7 | 14.7 | 1.1 | 72.3 | 6.4 | 2.4 | 70.4 | 8.22 |
| Comparative Production Example | H | 10 | 5.2 | 2.2 | 6.8 | 24.4 | 4.0 | 49.1 | 7.5 | 0.8 | 63.3 | 5.92 |

Rha: rhamnose, Fuc: fucose, Xyl: xylose, Ara: arabinose, Glc: glucose, Gal: galactose,
GlcA: glucuronic acid, GalA: galacturonic acid, DE: degree of methyl esterification of uronic acid

Although acidic polysaccharides containing galacturonic acid and glucuronic acid were obtained irrespective of extraction conditions, under strong acid extraction of pH 3 (lupin bean polysaccharide B) and alkaline extraction of pH 10 (lupin bean polysaccharide H), the galactose content was decreased to less than 50 wt.%. The lupin bean polysaccharides E, F, and A extracted at pH 6, 7, and 8 had a galacturonic acid content of more than 4 wt.%.

(Production Example 3)

Lupin bean polysaccharides I, J, K, L, M, and N were obtained in the same manner as in Production Example 1 except that the temperature at the time of extraction was set to 80°C, 90°C, 100°C, 110°C, 130°C, or 140°C.

(Recovery rate of acidic polysaccharide with respect to raw material fiber and uronic acid ratio with respect to total sugar)

A recovery rate of the lupin bean polysaccharides A, I, J, K, L, M, and N with respect to the lupin bean fiber as a raw material was calculated by the formula: recovered lupin bean polysaccharide (g)/used lupin bean fiber (g) *100 (wt.%). A total sugar amount of the lupin bean polysaccharide was quantified by a phenol sulfuric acid method, and the uronic acid content (wt.%) in the total sugar was calculated from a uronic acid amount quantified by a Blumenkrantz method. Uronic acid is a component that contributes to dispersion stabilization of the protein of the present invention, and a higher uronic acid content means that the lupin bean polysaccharide has higher functionality. The result is summarized in Table 3.

(Table 3) Recovery rate and uronic acid content

|  | Lupin bean polysaccharide | Extraction temperature (°C) | Recovery rate (wt.%) with respect to raw materials | Uronic acid content (wt.%) |
| --- | --- | --- | --- | --- |
| Comparative Production Example | I | 80 | 6. 3 | 7. 7 |
| Comparative Production Example | J | 90 | 9, 9 | 9. 6 |
| Comparative Production Example | K | 100 | 10.5 | 9.4 |
| Production Example | L | 110 | 40.1 | 9.6 |
| Production Example | A | 120 | 44.4 | 9.8 |
| Production Example | M | 130 | 48.6 | 9.2 |
| Comparative Production Example | N | 140 | 51.9 | 7.0 |

In the extraction at 80°C, the recovery rate was 6.3 wt.%, the uronic acid content was 7.7 wt.%, both of which were low values, and the lupin bean polysaccharide was not sufficiently extracted. In the extraction at 90°C, although the uronic acid content was as high as 9.6 wt.%, the recovery rate was as low as 9.9 wt.%, and the lupin bean polysaccharide was not sufficiently extracted. In the extraction at 140°C, the recovery rate was as high as 51.9 wt.%, while the uronic acid content was as low as 7.0 wt.%. This was presumed to be because although the lupin bean polysaccharide was sufficiently extracted, the hydrolysis of the polysaccharide proceeded at the same time. In these results, extraction at from 110 to 130°C was preferable.

(Example 3) Production of acidic milk beverage and evaluation of stability (system of protein concentration of 2.8 wt.% and 0.4 wt.% stabilizer)

o Preparation of fermented milk

An aqueous solution containing 21 wt.% of powdered skim milk (available from Yotsuba Milk Products Co., Ltd) was prepared and heat sterilized at 95°C with stirring. After cooling, commercially available plain yogurt was inoculated and fermented in an incubator at 40°C until pH reached 4.7. The fermented yogurt was passed through a high-pressure homogenizer (EnonizerLabo-01; SANMARU MACHINERY CO., LTD.) at a pressure of 15 MPa to be homogenized.

o Preparation of acidic milk beverage

20 parts of a 2 wt.% aqueous solution of the lupin bean polysaccharides A to H, 14 parts of a 50 wt.% granulated sugar aqueous solution, and 26 parts of water were mixed and cooled to 4°C. To this, 40 parts of fermented milk cooled to 4°C as well was added with stirring under ice cooling, and adjusted to an optional pH from pH 4.6 to pH 3.4 with a 50 wt.% lactic acid solution. The prepared solution was homogenized by passing through a high-pressure homogenizer (15 MPa) twice, transferred to and sealed in a glass bottle, and then heat sterilized in a hot water bath at 80°C for 20 minutes. In this context, in the acidic milk beverage prepared with the above-described formulation, the nonfat milk solids content is 8.4 wt.%, and the amount of the added stabilizer is 0.4 wt.%. An acidic milk beverage was obtained in the same manner using water-soluble soybean polysaccharides (SOYAFIBE-S-DA100: Fuji Oil Co., Ltd.) and HM-pectin (GENU-PECTIN type USP-H: CP Kelco) as comparison targets.

o Evaluation of stability of acidic milk beverage

As for the prepared acidic milk beverages, the stability was evaluated in terms of viscosity, precipitation rate, clear upper layer formation, and the overall evaluation considering all of these. The results are presented in Table 4 below. Each measurement evaluation method is presented below.

Viscosity

After storage at 4°C for 1 day and 2 weeks, the viscosity of the prepared acidic milk beverage at 4°C was measured with a cone-plate viscometer (DV2TCP; Brookfield) using a cone spindle (CPA-52Z; Brookfield) at a shear rate of 120/sec, and expressed in units (mPa·s). Precipitation Rate
20 g of the acidic milk beverage stored at 4°C for 1 day and 2 weeks was measured off into a centrifuge tube and centrifuged with a KOKUSAN centrifuge at 2000 rpm for 20 minutes. The supernatant was removed by decantation and a precipitate weight was measured. The precipitation rate was calculated by the following calculation formula.

Precipitation rate (wt.%) = (Weight of precipitation) / (Weight of the fractionated acidic milk beverage) $\times$ 100

**As for** precipitation rate, the precipitation rate of less than 2 wt.% was indicated as ⊚, the precipitation rate of 2 wt.% or more and less than 3 wt.% was indicated as ∘, the precipitation rate of 3 wt.% or more and less than 5 wt.% was indicated as △, and the precipitation rate of 5 wt.% or more was indicated as ×.

Clear Upper Layer

The presence or absence of clear upper layer at a solution upper surface after being settled for 1 day and 2 weeks was determined by observing visually. The presence of clear upper layer was indicated as + and the absence of clear upper layer was indicated as -.

Overall Evaluation

Taken together the items for evaluating stability described above, very good stability was indicated as ⊚, good as ∘, slightly good as △, and bad as ×. Specifically, in a case where either 1 day after the preparation or 2 weeks after the preparation was determined as a poor result, the overall evaluation was determined as ⊚ when the precipitation rate was ⊚ and the clear upper layer was -, the overall evaluation was determined as ∘ when the precipitation rate was ∘ and the clear upper layer was -, the overall evaluation was determined as △ when the precipitation rate was △, and the overall evaluation was determined as × when the precipitation rate was ×.

(Table 4) Stability of acidic milk beverage

(4-1)

| | | Acidic milk pH | 1 day after preparation | | | 2 weeks after preparation | | | Overall evaluation |
| | | | Viscosity | Precipitation rate | Clear upper layer | Viscosity | Precipitation rate | Clear upper layer | |
|---|---|---|---|---|---|---|---|---|---|
| Lupin bean polysaccharide | | 3.4 | 560.0 | × | + | 510.0 | × | + | × |
| | | 3.6 | 245.0 | × | + | 216.0 | × | + | × |
| | | 3.8 | 85.0 | × | + | 80.4 | × | + | × |
| Comparative Production Ex-ample (pH 3 Extraction) | B | 4.0 | 96.0 | × | + | 88.5 | × | + | × |
| | | 4.2 | 68.0 | × | + | 66.6 | × | + | × |
| | | 4.4 | 166.0 | × | + | 152.0 | × | + | × |
| | | 4.6 | 520.0 | × | + | 254.0 | × | + | × |

(continued)

(4-1)

|  | | Acidic milk pH | 1 day after preparation | | | 2 weeks after preparation | | | Overall evaluation |
|---|---|---|---|---|---|---|---|---|---|
|  | | | Viscosity | Precipitation rate | Clear upper layer | Viscosity | Precipitation rate | Clear upper layer | |
| Comparative Production Example (pH 4 Extraction) | C | 3.4 | 158.0 | × | + | 254.0 | × | + | × |
| | | 3.6 | 65.5 | × | + | 58.5 | × | + | × |
| | | 3 8 | 56.4 | Δ | + | 68.5 | × | + | × |
| | | 4.0 | 20.5 | ○ | - | 22.5 | ○ | - | ○ |
| | | 4.2 | 18.4 | ◎ | - | 19.2 | ◎ | - | ◎ |
| | | 4.4 | 22.5 | ◎ | - | 21.5 | ◎ | - | ◎ |
| | | 4.6 | 154.0 | × | + | 188.5 | × | + | × |
| Comparative Production Example (pH 5 Extraction) | D | 3.4 | 88.4 | × | + | 125.5 | × | + | × |
| | | 3.6 | 45.5 | Δ | + | 86.2 | × | + | × |
| | | 3.8 | 34.5 | Δ | + | 44.5 | Δ | + | Δ |
| | | 4.0 | 20.0 | O | - | 18.6 | ○ | - | O |
| | | 4.2 | 16.0 | ◎ | - | 18.0 | ◎ | - | ◎ |
| | | 4.4 | 18.6 | ◎ | - | 18.2 | ◎ | - | ◎ |
| | | 4.6 | 120.0 | × | + | 146.4 | × | + | × |
| Comparative Production Example (pH 6 Extraction) | E | 3.4 | 95.0 | × | + | 112.0 | × | + | × |
| | | 3.6 | 20.2 | ◎ | - | 22.4 | ◎ | - | ◎ |
| | | 3.8 | 18.4 | ◎ | - | 20.5 | ◎ | - | ◎ |
| | | 4.0 | 16.0 | ◎ | - | 16.5 | ◎ | - | ◎ |
| | | 4.2 | 16.5 | ◎ | - | 18.6 | ◎ | - | ◎ |
| | | 4.4 | 20.0 | ◎ | - | 22.4 | ◎ | - | ◎ |
| | | 4.6 | 145.0 | × | + | 188.5 | × | + | × |
| Comparative Production Example (pH 7 Extraction) | F | 3.4 | 65.5 | × | + | 125.4 | × | + | × |
| | | 3.6 | 20.4 | ◎ | - | 26.5 | ◎ | - | ◎ |
| | | 3.8 | 18.0 | ◎ | - | 20.2 | ◎ | - | ◎ |
| | | 4.0 | 16.5 | ◎ | - | 18.0 | ◎ | - | ◎ |
| | | 4.2 | 16.5 | ◎ | - | 18.0 | ◎ | - | ◎ |
| | | 4.4 | 21.5 | ◎ | - | 20.6 | ◎ | - | ◎ |
| | | 4.6 | 160.0 | × | + | 146.0 | × | + | × |

(4-2)

|  | | Acidic milk pH | 1 day after preparation | | | 2 weeks after preparation | | | Overall evaluation |
|---|---|---|---|---|---|---|---|---|---|
|  | | | Viscosity | Precipitation rate | Clear upper layer | Viscosity | Precipitation rate | Clear upper layer | |
| Lupin bean polysaccharide Comparative Production Example (pH 8 Extraction) | A | 3.4 | 50.5 | × | + | 45.0 | × | + | × |
| | | 3.6 | 18.5 | ◎ | - | 19.0 | ◎ | - | ◎ |
| | | 3.8 | 16.5 | ◎ | - | 18.4 | ◎ | - | ◎ |
| | | 4.0 | 16.0 | ◎ | - | 16.5 | ◎ | - | ◎ |
| | | 4.2 | 16.0 | ◎ | - | 16.0 | ◎ | - | ◎ |
| | | 4.4 | 20.4 | ◎ | - | 18.5 | ◎ | - | ◎ |
| | | 4.6 | 120.0 | × | + | 205.0 | × | + | × |

(continued)

(4-2)

| | | Acidic milk pH | 1 day after preparation | | | 2 weeks after preparation | | | Overall evaluation |
|---|---|---|---|---|---|---|---|---|---|
| | | | Viscosity | Precipitation rate | Clear upper layer | Viscosity | Precipitation rate | Clear upper layer | |
| Comparative Production Example (pH 9 Extraction) | G | 3.4 | 156.0 | × | + | 185.0 | × | + | × |
| | | 3.6 | 66.5 | × | + | 88.4 | × | + | × |
| | | 3.8 | 38.4 | Δ | + | 40.4 | Δ | + | Δ |
| | | 4.0 | 16.8 | ◎ | - | 18.2 | ◎ | - | ◎ |
| | | 4.2 | 20.5 | ◎ | - | 20.0 | ◎ | - | ◎ |
| | | 4.4 | 18.6 | ◎ | - | 20.5 | ◎ | - | ◎ |
| | | 4.6 | 84.5 | × | + | 122.4 | × | + | × |
| Comparative Production Example (pH 10 Extraction) | H | 3.4 | 440.0 | × | + | 366.0 | × | + | × |
| | | 3.6 | 310.0 | × | + | 285.0 | × | + | × |
| | | 3.8 | 64.0 | × | + | 75.0 | × | + | × |
| | | 4.0 | 52.5 | × | - | 58.5 | × | - | × |
| | | 4.2 | 48.5 | × | - | 52.4 | × | - | × |
| | | 4.4 | 124.0 | × | - | 168.0 | × | - | × |
| | | 4.6 | 365.0 | × | + | 255.0 | × | + | × |
| HM-pectin | | 3.4 | 560.0 | × | + | 600.0 | × | + | × |
| | | 3.6 | 160.0 | × | + | 125.0 | × | + | × |
| | | 3.8 | 64.5 | ○ | + | 85.5 | Δ | + | Δ |
| | | 4.0 | 56.0 | ◎ | - | 60.4 | ◎ | - | ◎ |
| | | 4.2 | 48.5 | ◎ | - | 50.2 | ◎ | - | ◎ |
| | | 4.4 | 42.5 | ◎ | - | 44.6 | ◎ | - | ◎ |
| | | 4.6 | 500.0 | × | + | 350.0 | × | + | × |
| Water-soluble soybean polysaccharide | | 3.4 | 18.4 | Δ | + | 20.6 | Δ | + | Δ |
| | | 3.6 | 16.2 | ◎ | - | 15. 8 | ◎ | - | ◎ |
| | | 3.8 | 14.5 | ◎ | - | 15.0 | ◎ | - | ◎ |
| | | 4.0 | 14.0 | ◎ | - | 25.2 | Δ | + | × |
| | | 4.2 | 36.5 | Δ | + | 45.5 | × | + | × |
| | | 4.4 | 58.0 | × | + | 68.5 | × | + | × |
| | | 4.6 | 360.0 | × | + | 256.0 | × | + | × |

The lupin bean polysaccharides C, D, and G had a linear structure, a mass average molecular weight of from 2400000 to 5000000, a uronic acid content, which was the sum of glucuronic acid and galacturonic acid, of 8 wt.% or more, and a galactose content of 70 wt.% or more. The lupin bean polysaccharide was able to stabilize protein in a high protein system of a protein concentration of 2.8 wt.% (nonfat milk solids content of 8.4 wt.%) in a pH range from pH 4.0 to pH 4.4. On the other hand, the lupin bean polysaccharides A, E, and F extracted in the pH range from pH 6 to pH 8 had a mass average molecular weight of from 5200000 to 6300000, a uronic acid content, which was the sum of glucuronic acid and galacturonic acid, of 9 wt.% or more, a galactose content of 70 wt.% or more, and a weight ratio of galactose to uronic acid of from 6.9 to 7.4, and the protein of the acidic milk beverage could be stabilized from pH 3.6 to pH 4.4 under the same conditions. The acidic milk beverage recognized to be stable had a low viscosity of 30 mP·s or less, and was finished to have a refreshing taste.

(Example 4) Production of acidic milk beverage and evaluation of stability (system of protein concentration of 1.0 wt.% and from 0.1 to 1.0 wt.% stabilizer)

In the methods for preparing an acidic milk beverage and for evaluating stability of Example 3, an acidic milk beverage was prepared completely similarly except that the protein concentration was 1.0 wt.% (nonfat milk solids content of 3.0 wt.%) and the amount of the lupin bean polysaccharide A as the stabilizer to be blended was 0.1, 0.2, 0.4, 0.6, and 1.0 wt.%, and the stability was evaluated.

(Table 5) Stability of acidic milk beverage

(5-1)

| | Amount of added stabilizer | Acidic milk pH | 1 day after preparation | | | 2 weeks after preparation | | | Overall evaluation |
|---|---|---|---|---|---|---|---|---|---|
| | | | Viscosity | Precipitation rate | Clear upper layer | Viscosity | Precipitation rate | Clear upper layer | |
| Lupin bean polysaccharide A | 0.2 | 3.4 | 25.5 | × | + | 30.2 | × | + | × |
| | | 3.6 | 16.4 | ○ | + | 16.8 | ○ | + | ○ |
| | | 3.8 | 10.2 | ◎ | - | 11.4 | ◎ | - | ◎ |
| | | 4.0 | 10.6 | ◎ | - | 10.8 | ◎ | - | ◎ |
| | | 4.2 | 11.2 | ◎ | - | 10.6 | ◎ | - | ◎ |
| | | 4.4 | 10.5 | ◎ | - | 12.4 | ◎ | - | ◎ |
| | | 4.6 | 25.4 | × | + | 28.0 | × | + | × |
| | 0.4 | 3.4 | 21.4 | × | + | 25.0 | × | + | × |
| | | 3.6 | 12.8 | ◎ | - | 12.4 | ◎ | - | ◎ |
| | | 3.8 | 11.2 | ◎ | - | 12.6 | ◎ | - | ◎ |
| | | 4.0 | 10.0 | ◎ | - | 11.2 | ◎ | - | ◎ |
| | | 4.2 | 10.2 | ◎ | - | 10.8 | ◎ | - | ◎ |
| | | 4.4 | 11.8 | ◎ | - | 12.2 | ◎ | - | ◎ |
| | | 4.6 | 22.8 | × | + | 26.6 | × | + | × |
| | 0.6 | 3.4 | 20.6 | × | + | 22.6 | × | + | × |
| | | 3.6 | 14.2 | ◎ | - | 14.4 | ◎ | - | ◎ |
| | | 3.8 | 11.4 | ◎ | - | 12.0 | ◎ | - | ◎ |
| | | 4.0 | 11.2 | ◎ | - | 11.8 | ◎ | - | ◎ |
| | | 4.2 | 12.0 | ◎ | - | 12.6 | ◎ | - | ◎ |
| | | 4.4 | 12.6 | ◎ | - | 13.2 | ◎ | - | ◎ |
| | | 4.6 | 25.5 | × | + | 28.4 | × | + | × |
| | 1.0 | 3.4 | 40.4 | × | + | 36.4 | × | + | × |
| | | 3.6 | 20.5 | ◎ | - | 20.5 | ◎ | - | ◎ |
| | | 3.8 | 18.4 | ◎ | - | 19.8 | ◎ | - | ◎ |
| | | 4.0 | 18.0 | ◎ | - | 19.6 | ◎ | - | ◎ |
| | | 4.2 | 20.2 | ◎ | - | 21.4 | ◎ | - | ◎ |
| | | 4.4 | 18.8 | ◎ | - | 20.2 | ◎ | - | ◎ |
| | | 4.6 | 34.6 | × | + | 46.0 | × | + | × |

(5-2)

| | Amount of added stabilizer | Acidic milk pH | 1 day after preparation | | | 2 weeks after preparation | | | Overall evaluation |
|---|---|---|---|---|---|---|---|---|---|
| | | | Viscosity | Precipitation rate | Clear upper layer | Viscosity | Precipitation rate | Clear upper layer | |
| HM-pectin | 0.2 | 3.4 | 54.2 | × | + | 56.0 | × | + | × |
| | | 3.6 | 25.3 | × | + | 26.6 | × | + | × |
| | | 3.8 | 20.4 | ○ | - | 21.0 | ○ | - | ○ |
| | | 4.0 | 16.1 | ◎ | - | 18.4 | ◎ | - | ◎ |
| | | 4.2 | 15.5 | ◎ | - | 16.4 | ◎ | - | ◎ |
| | | 4.4 | 17.5 | ◎ | - | 18.2 | ◎ | - | ◎ |
| | | 4.6 | 44.0 | Δ | - | 48.4 | Δ | - | Δ |
| | 0.4 | 3.4 | 105.4 | × | + | 112.8 | × | + | × |
| | | 3.6 | 42.2 | × | + | 52.4 | × | + | × |
| | | 3.8 | 34.6 | ○ | - | 33.6 | ○ | - | ○ |
| | | 4.0 | 23.2 | ◎ | - | 23.8 | ◎ | - | ◎ |
| | | 4.2 | 22.0 | ◎ | - | 24.2 | ◎ | - | ◎ |
| | | 4.4 | 23.0 | ◎ | - | 24.6 | ◎ | - | ◎ |
| | | 4.6 | 48.5 | Δ | - | 50.6 | Δ | - | Δ |
| | 0.6 | 3.4 | 162.4 | × | + | 140.0 | × | + | × |
| | | 3.6 | 45.6 | × | + | 50.5 | × | + | × |
| | | 3.8 | 38.4 | ○ | - | 39.5 | ○ | - | ○ |
| | | 4.0 | 26.7 | ◎ | - | 28.0 | ◎ | - | ◎ |
| | | 4.2 | 28.5 | ◎ | - | 29.6 | ◎ | - | ◎ |
| | | 4.4 | 29.0 | ◎ | - | 30.2 | ◎ | - | ◎ |
| | | 4.6 | 66.8 | Δ | - | 70.4 | Δ | - | Δ |
| | 1.0 | 3.4 | 182.0 | × | + | 220.0 | × | + | × |
| | | 3.6 | 58.4 | × | + | 65.4 | × | + | × |
| | | 3.8 | 45.5 | ○ | - | 50.4 | ○ | - | ○ |
| | | 4.0 | 32.4 | ◎ | - | 40.5 | ◎ | - | ◎ |
| | | 4.2 | 36.8 | ◎ | - | 40.2 | ◎ | - | ◎ |
| | | 4.4 | 40.6 | ◎ | - | 48.5 | ◎ | - | ◎ |
| | | 4.6 | 88.2 | Δ | - | 100.6 | Δ | - | Δ |

(continued)

| Amount of added stabilizer | Acidic milk pH | 1 day after preparation | | | 2 weeks after preparation | | | Overall evaluation |
|---|---|---|---|---|---|---|---|---|
| | | Viscosity | Precipitation rate | Clear upper layer | Viscosity | Precipitation rate | Clear upper layer | |
| Water-soluble soybean polysaccharide | | | | | | | | |
| 0.2 | 3.4 | 26.4 | × | + | 25.5 | × | + | × |
| | 3.6 | 16.8 | ○ | - | 17.2 | ○ | - | ○ |
| | 3.8 | 14.2 | ◎ | - | 14.8 | ◎ | - | ◎ |
| | 4.0 | 12.8 | ◎ | - | 14.2 | ◎ | - | ◎ |
| | 4.2 | 16.3 | △ | + | 17.4 | △ | + | △ |
| | 4.4 | 18.8 | △ | + | 22.8 | × | + | × |
| | 4.6 | 26.2 | × | + | 28.3 | × | + | × |
| 0.4 | 3.4 | 20.6 | × | + | 22.4 | × | + | × |
| | 3.6 | 14.4 | ◎ | - | 15.0 | ◎ | - | ◎ |
| | 3.8 | 11.5 | ◎ | - | 12.4 | ◎ | - | ◎ |
| | 4.0 | 10.8 | ◎ | - | 11.5 | ◎ | - | ◎ |
| | 4.2 | 13.5 | ○ | + | 15.8 | △ | + | △ |
| | 4.4 | 14.4 | △ | + | 18.6 | × | + | × |
| | 4.6 | 25.5 | × | + | 26.4 | × | + | × |
| 0.6 | 3.4 | 18.4 | × | + | 22.8 | × | + | × |
| | 3.6 | 14.0 | ◎ | - | 14.8 | ◎ | - | ◎ |
| | 3.8 | 12.5 | ◎ | - | 12.8 | ◎ | - | ◎ |
| | 4.0 | 12.0 | ◎ | - | 12.6 | ◎ | - | ◎ |
| | 4.2 | 14.6 | ○ | + | 15.8 | ○ | + | ○ |
| | 4.4 | 15.5 | △ | + | 18.0 | × | + | × |
| | 4.6 | 26.0 | × | + | 31.0 | × | + | × |
| 1.0 | 3.4 | 24.5 | × | + | 27.2 | × | + | × |
| | 3.6 | 18.5 | ◎ | - | 18.4 | ◎ | - | ◎ |
| | 3.8 | 14.4 | ◎ | - | 14.7 | ◎ | - | ◎ |
| | 4.0 | 13.6 | ◎ | - | 14.1 | ◎ | - | ◎ |
| | 4.2 | 14.0 | ◎ | - | 16.2 | ○ | + | ○ |
| | 4.4 | 18.6 | △ | - | 20.8 | × | + | × |
| | 4.6 | 30.5 | × | + | 34.4 | × | + | × |

The lupin bean polysaccharide A in a range of amount to be blended from 0.2 wt.% to 1.0 wt.% was able to stabilize dispersion of milk protein in a wide pH range from pH 3.6 to pH 4.4. When 1.0 wt.% of the lupin bean polysaccharide A was added to an acidic milk beverage having a protein concentration of 1.0 wt.% (nonfat milk solids content of 3.0 wt.%), no change in flavor was observed, and the viscosity was 30 mP·s or less, so that a refreshing taste was maintained with a low viscosity peculiar to the lupin bean polysaccharide. On the other hand, the acidic milk beverage stabilized with HM-pectin under the same conditions exhibited strong stickiness, and in the acidic milk beverage stabilized with a water-soluble soybean polysaccharide, a flavor peculiar to soybean was strongly felt.

Industrial Applicability

The present invention provides a dispersion stabilizer for an acidic protein beverage, that is, a dispersion stabilizer for suppressing precipitation and aggregation of protein occurring under acidic conditions, and by using the dispersion stabilizer of the present invention, it is possible to provide a low-viscosity acidic protein beverage with a refreshing taste over a wide range from pH 4.0 to pH 4.4, and from pH 3.6 to pH 4.4 in a particularly excellent case. In addition, the production is also easy, and neither the washing step of the raw material nor the deesterification step is required.

**Claims**

1. An acidic polysaccharide, having a mass average molecular weight of from 2000000 to 8000000 and comprising, as constituent saccharides, 60 wt.% or more of galactose, 20 wt.% or less of uronic acid, and 4 wt.% or more of glucuronic acid.

2. The acidic polysaccharide according to claim 1, wherein a degree of methyl esterification of the uronic acid is 60% or more.

3. The acidic polysaccharide according to claim 1 or 2, which is derived from beans.

4. The acidic polysaccharide according to claim 3, which is derived from a seed of a lupin bean.

5. The acidic polysaccharide according to claim 1 or 2, wherein a structure of a single molecule observed by an atomic force microscope has a linear structure.

6. The acidic polysaccharide according to claim 1, wherein a degree of methyl esterification of the uronic acid is 60% or more, the acidic polysaccharide is derived from a seed of a lupin bean, and a structure of a single molecule observed by an atomic force microscope has a linear structure.

7. A method for producing an acidic polysaccharide, the method comprising heat-extracting a seed of a lupin bean or fibrous fraction thereof as a raw material at a temperature higher than 100°C in an aqueous medium having from pH 4 to pH 9.

8. The method for producing an acidic polysaccharide according to claim 7, wherein neither a deesterification step nor a washing step of the raw material is performed.

9. The method for producing an acidic polysaccharide according to claim 7, wherein the acidic polysaccharide to be obtained has a molecular weight of from 2000000 to 8000000 and contains, as constituent saccharides, 60 wt.% or more of galactose, 20 wt.% or less of uronic acid, and 4 wt.% or more of glucuronic acid.

10. The method for producing an acidic polysaccharide according to claim 8, wherein the acidic polysaccharide to be obtained has a molecular weight of from 2000000 to 8000000 and contains, as constituent saccharides, 60 wt.% or more of galactose, 20 wt.% or less of uronic acid, and 4 wt.% or more of glucuronic acid.

11. A dispersion stabilizer for a protein, comprising, as an active ingredient, an acidic polysaccharide having a molecular weight of from 2000000 to 8000000, the acidic polysaccharide containing, as constituent saccharides, 60 wt.% or more of galactose, 20 wt.% or less of uronic acid, and 4 wt.% or more of glucuronic acid.

12. The dispersion stabilizer for a protein according to claim 11, wherein the acidic polysaccharide is derived from beans.

**13.** The dispersion stabilizer according to claim 11 or 12, which is for an acidic protein beverage.

**14.** The dispersion stabilizer according to claim 13, which is for an acidic protein beverage having a protein content of 1 wt.% or more in the beverage.

**15.** The dispersion stabilizer for a protein according to claim 11, wherein the acidic polysaccharide is derived from beans, and the dispersion stabilizer is for an acidic protein beverage having a protein content of 1 wt.% or more in the beverage.

**16.** A method for stabilizing dispersion for an acidic protein beverage, the method comprising using an acidic polysaccharide having a molecular weight of from 2000000 to 8000000 and containing, as constituent saccharides, 60 wt.% or more of galactose, 20 wt.% or less of uronic acid, and 4 wt.% or more of glucuronic acid.

**17.** The method for stabilizing dispersion for an acidic protein beverage according to claim 16, wherein the acidic polysaccharide is derived from beans.

**18.** The method for stabilizing dispersion for an acidic protein beverage according to claim 16, wherein the acidic protein beverage has a protein content of 1 wt.% or more in the beverage.

**19.** The method for stabilizing dispersion for an acidic protein beverage according to claim 17, wherein the acidic protein beverage has a protein content of 1 wt.% or more in the beverage.

# FIG. 1

# FIG. 2

## INTERNATIONAL SEARCH REPORT

| International application No. |
| --- |
| **PCT/JP2024/025070** |

### A. CLASSIFICATION OF SUBJECT MATTER

*A23L 29/20*(2016.01)i; *A23C 11/10*(2021.01)i; *A23L 11/00*(2021.01)i; *A23L 11/60*(2021.01)i; *A23L 11/65*(2021.01)i; *A23L 29/206*(2016.01)i; *C08B 37/00*(2006.01)i

FI: A23L29/20; A23L29/206; A23L11/00 F; A23C11/10; C08B37/00 Q

According to International Patent Classification (IPC) or to both national classification and IPC

### B. FIELDS SEARCHED

Minimum documentation searched (classification system followed by classification symbols)

A23L29/20; A23C11/10; A23L11/00; A23L11/60; A23L11/65; A23L29/206; C08B37/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580/JSTChina (JDreamIII); CAplus/BIOSIS/FSTA/AGRICOLA (STN)

### C. DOCUMENTS CONSIDERED TO BE RELEVANT

| Category* | Citation of document, with indication, where appropriate, of the relevant passages | Relevant to claim No. |
| --- | --- | --- |
| X | EVANS, A. J. et al. The Carbohydrate Composition of Cotyledons and Hulls of Cultivars of Lupinus angustfolius from Western Australia. J. Sci. Food. Agric. 1993, vol. 61, pp. 189-194 in particular, column "Extraction of polysaccharides with chelating agents", table 3 | 1-6 |
| A | | 7-19 |
| A | WO 2012/176852 A1 (FUJI OIL COMPANY LIMITED) 27 December 2012 (2012-12-27) claims, paragraph [0016], examples | 1-19 |
| A | JP 05-262802 A (FUJI OIL COMPANY LIMITED) 12 October 1993 (1993-10-12) claims, paragraph [0013], examples | 1-19 |
| A | JP 53-104764 A (KIKKOMAN SHOYU CO., LTD.) 12 September 1978 (1978-09-12) entire text, all drawings | 1-19 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **28 August 2024** | **10 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/025070** |

| Patent document cited in search report | | | Publication date (day/month/year) | Patent family member(s) | | | Publication date (day/month/year) |
| --- | --- | --- | --- | --- | --- | --- | --- |
| WO | 2012/176852 | A1 | 27 December 2012 | US | 2014/0134310 | A1 | |
| | | | | claims, paragraph [0025], examples | | | |
| | | | | EP | 2725038 | A1 | |
| | | | | CN | 103608360 | A | |
| JP | 05-262802 | A | 12 October 1993 | US | 5710270 | A | |
| | | | | claims, column 3, lines 15-24, examples | | | |
| | | | | EP | 562171 | A2 | |
| | | | | KR | 10-1993-0019698 | A | |
| | | | | CN | 1076700 | A | |
| JP | 53-104764 | A | 12 September 1978 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2599477 B
- JP 3280768 B
- WO 2012176852 A
- WO 2016031858 A
- WO 2008149738 A

**Non-patent literature cited in the description**

- *Food Hydrocolloids*, 2003, vol. 17, 333-343
- *J. Agric. Food Chem.*, 2006, vol. 54 (17), 6241-6246